# EUROPEAN PATENT APPLICATION

(11) **EP 2 050 496 A1**
(43) Date of publication of application: **22.04.2009**
(21) Application number: 07851055.9
(22) Date of filing: 21.12.2007
(51) Int. Cl.: B01J 23/63, B01D 53/86, B01J 35/10, F01N 3/08, F01N 3/10

(54) **EXHAUST GAS PURIFYING CATALYST**

(30) Priority: 21.12.2006 JP 2006344646
(71) Applicant: Cataler Corporation, Kakegawa-shi Shizuoka 437-1492 (JP); Toyota Jidosha Kabushiki Kaisha, Toyota-shi, Aichi 471-8571 (JP)
(72) Inventor: TAKEUCHI, Michihiko, Shizuoka 437-1492 (JP); ORI, Hirotaka, Shizuoka 437-1492 (JP); HACHISUKA, Ichiro, Aichi 471-8571 (JP); YAMATO, Masanori, Aichi 471-8571 (JP)
(74) Representative: Luderschmidt, Schüler & Partner
(86) International application number: PCT/JP2007/074703
(87) International publication number: WO 2008/075769

(57) **Abstract**

Decreasing hydrogen sulfide emission without using nickel is made possible. An exhaust gas-purifying catalyst (1) includes a support substrate (2), a catalyst support layer (3) supported by the support substrate (2) and including porous carrier (31), and a precious metal (4) supported by the porous carrier (31). A mean diameter of the precious metal (4) is 5 nm or larger.

## Description

### Technical Field

The present invention relates to an exhaust gas-purifying catalyst.

### Background Art

In general, an automotive vehicle such as automobile uses liquid fuel. Many liquid fuels contain sulfur. Thus, in the case where exhaust gas, which is to be purified by an exhaust gas-purifying catalyst, is reducing, for example, a reaction of sulfur in the exhaust gas produces hydrogen sulfide. For this reason, further reduction in hydrogen sulfide emission is necessary.

"Catalyst Today", vol. 9, 1991, pp. 105-112 describes an exhaust gas-purifying catalyst that contains nickel. When such an exhaust gas-purifying catalyst is used, hydrogen sulfide emission can be decreased.

However, in some regions such as Europe, nickel and nickel compounds are designated environmental hazardous substances and their use in catalysts is prohibited. Thus, a technique is necessary that decreases hydrogen sulfide emission without using nickel.

### Disclosure of Invention

An object of the present invention is to make it possible to decrease hydrogen sulfide emission without using nickel.

According to an aspect of the present invention, there is provided an exhaust gas-purifying catalyst comprising a support substrate, a catalyst support layer supported by the support substrate and including porous carrier, and a precious metal supported by the porous carrier, a mean diameter of the precious metal being larger than 5 nm.

### Brief Description of Drawings

FIG. 1 is a view schematically showing an exhaust gas-purifying catalyst according to an embodiment of the present invention;
FIG. 2 is an enlarged view showing a part of the exhaust gas-purifying catalyst shown in FIG. 1;
FIG. 3 is a graph showing conditions for measuring hydrogen sulfide emission;
FIG. 4 is a graph showing hydrogen sulfide emission;
FIG. 5 is a graph showing an example of effect that a diameter of platinum exerts on hydrogen sulfide emission; and
FIG. 6 is a graph showing an example of effect that a BET surface area of a catalyst exerts on hydrogen sulfide emission.

### Best Mode for Carrying Out the Invention

An embodiment of the present invention will be described below.

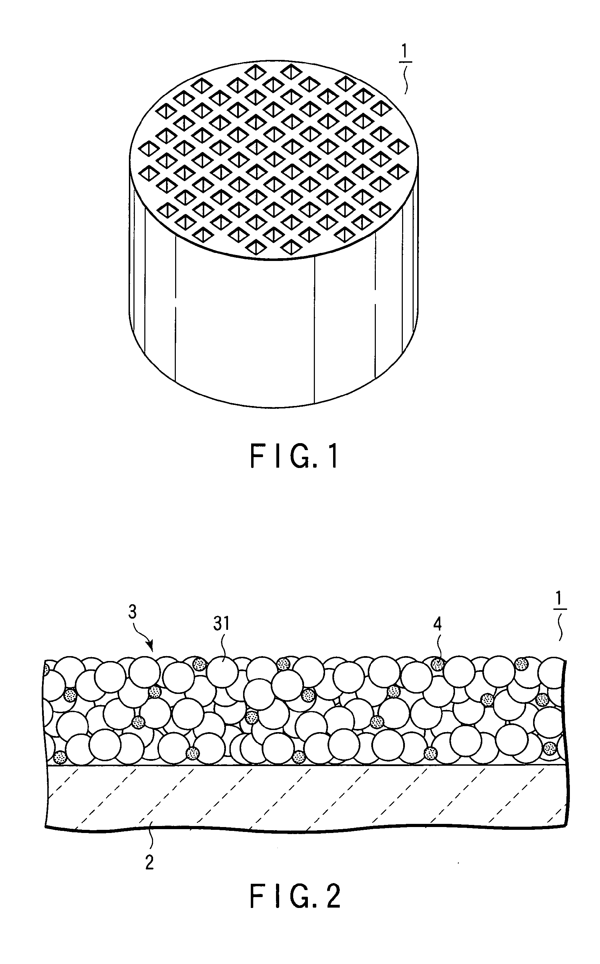

FIG. 1 is a view schematically showing an exhaust gas-purifying catalyst according to an embodiment of the present invention. FIG. 2 is an enlarged view showing a part of the exhaust gas-purifying catalyst shown in FIG. 1.

The exhaust gas-purifying catalyst 1 shown in FIGS. 1 and 2 is a monolith catalyst.

The exhaust gas-purifying catalyst 1 includes a monolith honeycomb support as a support substrate 2. Typically, the support substrate 2 is made of ceramics such as cordierite.

On the support substrate 2, a catalyst support layer 3 is formed. The catalyst support layer 3 may have a monolayer structure or multilayered structure.

The catalyst support layer 3 includes porous carriers 31. As the material of the porous carriers 31, alumina, silica, zirconia or titania can be used, for example.

The catalyst support layer 3 can further include materials other than the porous carriers 31. For example, the catalyst support layer 3 may further include an oxygen storage material.

The oxygen storage material is, for example, a cerium oxide or an oxide that contains cerium and a rare-earth element other than cerium. The oxide that contains cerium and a rare-earth element other than cerium is composite oxide and/or solid solution. As the oxide that contains cerium and a rare-earth element other than cerium, an oxide containing cerium and zirconium can be used, for example. The oxygen storage material may contain metal elements other than rare-earth elements.

The catalyst support layer 3 supports precious metals 4. The precious metals 4 are, for example, an element of platinum group such as platinum, palladium or rhodium, or a mixture thereof. In the case where a multilayered structure is employed in the catalyst support layer 3, the layers included in the catalyst support layer 3 may support the same precious metal or support different precious metals.

A mean diameter of the precious metals 4 is 5 nm or larger, typically 10 nm or larger, and more typically 30 nm or larger. The mean diameter of the precious metals 4 is set, for example, 100 nm or smaller, and preferably 60 nm or smaller for the reason described below.

In the case where the gas supplied to a combustion engine is a fuel-lean gas, the exhaust gas emitted by the combustion engine is usually oxidizing. In this case, sulfur in the exhaust gas is not reduced into hydrogen sulfide by the catalytic action of the precious metals 4, but the catalyst support layer 3 adsorbs a part of sulfur. When the gas supplied to the combustion engine is changed from the fuel-lean gas to a fuel-rich gas, the combustion engine emits a reducing gas as the exhaust gas. Therefore, sulfur in the exhaust gas and sulfur desorbed from the catalyst support layer 3 are reduced into hydrogen sulfide by the catalytic action of the precious metals 4. This is assumed to be a reason why an automotive vehicle gives off unpleasant odor.

When the mean diameter of the precious metals 4 is enlarged while the amount of the precious metals 4 is kept constant, the surface area of the precious metals 4 becomes smaller. Thus, the reduction of sulfur can be made less prone to occur, and therefore, reduction in hydrogen sulfide emission can be made possible.

However, when the mean diameter of the precious metals 4 is enlarged while the amount of the precious metals 4 is kept constant, emission of hydrocarbons, carbon monoxide and nitrogen oxides may increase. Thus, in the case of considering the above circumstances, the mean diameter of the precious metals 4 may be set at a certain small value.

Note that the mean diameter of the precious metals 4 is a value determined by the following method. First, the exhaust gas-purifying catalyst 1 is cut along planes parallel with its end faces so as to divide it into 25 pieces whose dimensions in the direction perpendicular to the cut surfaces are equal to one another. Then, for each of the pieces, photographs of areas in the cut surface are taken using transmission electron microscope (TEM). The magnification is set within a range of 2,000 to 10,000 times. Thereafter, for all the precious metals 4 in each TEM image, the vertical length in the image is measured. Note that in the case where the porous carrier 4, etc. blocks a part of a precious metal 4 from view, the particular precious metal 4 should be ignored. As above, each length is measured for many precious metals 4, and then, their mean value is calculated. The mean value thus obtained is the mean diameter of the precious metals 4.

The exhaust gas-purifying catalyst 1 has a surface area per unit volumetric capacity in liter of, for example, 15,000 m² or smaller, typically 12,000 m² or smaller, and more typically 10,000 m² or smaller. The surface area per unit volumetric capacity in liter of the exhaust gas-purifying catalyst 1 is set, for example, 2,500 m² or larger, and preferably 5,000 m² or larger for the reason described below.

When the surface area is decreased, adsorption of sulfur becomes less prone to occur. Therefore, hydrogen sulfide emission can be decreased. However, when the surface area is decreased excessively, the distance between the precious metals 4 becomes shorter, and thus, sintering of them becomes prone to occur. Therefore, in the case of considering the above circumferences, the surface area may be set at a certain large value.

Note that the "surface area" means a surface area obtained using BET adsorption isotherm, i.e., BET surface area. Note also that the "BET specific surface area" means a specific surface area obtained using BET adsorption isotherm.

The exhaust gas-purifying catalyst 1 contains almost no nickel, and typically nickel-free. Nonetheless, the exhaust gas-purifying catalyst 1 can sufficiently decrease hydrogen sulfide emission. That is, according to the present embodiment, hydrogen sulfide emission can be decreased without using nickel.

The exhaust gas-purifying catalyst 1 is so designed that a ratio S₁/S₀ of a specific surface area S₁ of the catalyst support layer 3 after heated in the air atmosphere at 1,000°C for 5 hours with respect to a specific surface area S₀ of the catalyst support layer 3 before heating is, for example, 0.67 or more, typically 0.7 or more, and more typically 0.8 or more. Note that the "specific surface area" is the "BET specific surface area" described above. When the ratio S₁/S₀ is increased, adsorption of sulfur by the oxygen storage material can be suppressed. Therefore, it is possible to further decrease hydrogen sulfide emission.

The ratio S₁/S₀ is a value related to an amount of sulfur that may be stored in the oxygen storage material. The materials of the catalyst support layer 3 other than the oxygen storage material do not cause a change in specific surface area due to the above heat treatment. In contrast, the oxygen storage material causes a relatively great change in specific surface area due to the above heat treatment. The larger the initial specific surface area is, the greater the rate in change is. In addition, the greater the proportion of the oxygen storage material in the catalyst support layer 3 is, the greater the rate in change becomes.

Therefore, when the ratio S₁/S₀ is increased, it is possible to further decrease the amount of sulfur that may be stored in the oxygen storage material.

Note that the ratio S₁/S₀ is usually 1 or less, and typically 0.95 or less.

Examples of the present invention will be described below.

### (Manufacture of catalyst A)

100g of alumina powder, 100g of alumina sol containing alumina at a concentration of 10% by mass, 52g of cerium oxide, aqueous dinitrodiamino platinum containing 1g of platinum, aqueous rhodium nitrate containing 0.2g of rhodium, and deionized water were mixed together to prepare slurry. Note that the BET specific surface area of alumina used in this example was 200 m²/g, the BET specific surface area of cerium oxide was 75 m²/g, and BET specific surface area of the dried product of the alumina sol was 250 m²/g.

Then, a monolith honeycomb support having a cylindrical shape was wash-coated with the slurry. As the monolith honeycomb support, used was the one that was made of cordierite and provided with 400 cells per square inch and whose volumetric capacity was 1L.

Subsequently, the honeycomb support coated with the slurry was dried at 150°C for 1 hour. Thereafter, the structure obtained by the above method was subjected to firing at 900°C for 1 hour.

An exhaust gas-purifying catalyst was thus manufactured. Hereinafter, the exhaust gas-purifying catalyst is referred to as catalyst A.

By the method described above, a mean diameter of platinum was determined on the catalyst A. As a result, the mean diameter of platinum was 32 nm. Further, a BET surface area per unit volumetric capacity in liter was determined on the catalyst A. As a result, the BET surface area per unit volumetric capacity in liter of the catalyst A was about 16,000 m²/L-cat.

### (Manufacture of catalyst B)

60g of alumina powder, 50g of alumina sol containing alumina at a concentration of 10% by mass, 26g of cerium oxide, an aqueous solution of colloidal platinum containing 1g of platinum, aqueous rhodium nitrate containing 0.2g of rhodium, and deionized water were mixed together to prepare slurry. Note that the BET specific surface area of alumina used in this example was 80 m²/g, and the BET specific surface area of cerium oxide was 10 m²/g.

Then, the same monolith honeycomb support as that used in manufacture of the catalyst A was wash-coated with the slurry. Subsequently, the honeycomb support coated with the slurry was dried at 150°C for 1 hour. Thereafter, the structure obtained by the above method was subjected to firing at 500°C for 1 hour.

An exhaust gas-purifying catalyst was thus manufactured. Hereinafter, the exhaust gas-purifying catalyst is referred to as catalyst B.

By the method described above, a mean diameter of platinum was determined on the catalyst B. As a result, the mean diameter of platinum was 10 nm. Further, a BET surface area per unit volumetric capacity in liter was determined on the catalyst B. As a result, the BET surface area per unit volumetric capacity in liter of the catalyst B was about 6,000 m²/L-cat.

### (Manufacture of catalyst C)

An exhaust gas-purifying catalyst was manufactured by the same method as that described for the catalyst B except that 1g of platinum black was used instead of the aqueous solution of colloidal platinum. Hereinafter, the exhaust gas-purifying catalyst is referred to as catalyst C.

By the method described above, a mean diameter of platinum was determined on the catalyst C. As a result, the mean diameter of platinum was 25 nm. Further, a BET surface area per unit volumetric capacity in liter was determined on the catalyst C. As a result, the BET surface area per unit volumetric capacity in liter of the catalyst C was about 6,000 m²/L-cat.

### (Manufacture of catalyst D)

An exhaust gas-purifying catalyst was manufactured by the same method as that described for the catalyst A except that the temperature of firing was changed from 900°C to 500°C. Hereinafter, the exhaust gas-purifying catalyst is referred to as catalyst D.

By the method described above, a mean diameter of platinum was determined on the catalyst D. As a result, the mean diameter of platinum was 0.7 nm. Further, a BET surface area per unit volumetric capacity in liter was determined on the catalyst D. As a result, the BET surface area per unit volumetric capacity in liter of the catalyst D was about 25,000 m²/L-cat.

### (Manufacture of catalyst E)

100g of alumina powder, 100g of alumina sol containing alumina at a concentration of 10% by mass, 52g of cerium oxide, aqueous dinitrodiamino platinum containing 1g of platinum, aqueous rhodium nitrate containing 0.2g of rhodium, 7.5g of nickel oxide, and deionized water were mixed together to prepare slurry. Note that this slurry is the same as that used in manufacture of the catalyst A except that it further contains 7.5 of nickel oxide.

Then, the same monolith honeycomb support as that used in manufacture of the catalyst A was wash-coated with the slurry. Subsequently, the honeycomb support coated with the slurry was dried at 150°C for 1 hour. Thereafter, the structure obtained by the above method was subjected to firing at 500°C for 1 hour.

An exhaust gas-purifying catalyst was thus manufactured. Hereinafter, the exhaust gas-purifying catalyst is referred to as catalyst E.

By the method described above, a mean diameter of platinum was determined on the catalyst E. As a result, the mean diameter of platinum was 0.7 nm. Further, a BET surface area per unit volumetric capacity in liter was determined on the catalyst E. As a result, the BET surface area per unit volumetric capacity in liter of the catalyst E was about 25,000 m²/L-cat.

### (Manufacture of catalyst L)

An exhaust gas-purifying catalyst was manufactured by the same method as that described for the catalyst B except that alumina having a BET specific surface area of 200 m²/g and cerium oxide having a BET specific surface area of 75 m²/g were used instead of alumina having a BET specific surface area of 80 m²/g and cerium oxide having a BET specific surface area of 10 m²/g. Hereinafter, the exhaust gas-purifying catalyst is referred to as catalyst L.

By the method described above, a mean diameter of platinum was determined on the catalyst L. As a result, the mean diameter of platinum was 10 nm. Further, a BET surface area per unit volumetric capacity in liter was determined on the catalyst L. As a result, the BET surface area per unit volumetric capacity in liter of the catalyst L was about 15,000 m²/L-cat.

### (Manufacture of catalyst M)

An exhaust gas-purifying catalyst was manufactured by the same method as that described for the catalyst A except that aqueous palladium nitrate containing 2g of palladium was used instead of aqueous dinitrodiamino platinum containing 1g of platinum. Hereinafter, the exhaust gas-purifying catalyst is referred to as catalyst M.

By the method described above, a mean diameter of palladium was determined on the catalyst M. As a result, the mean diameter of palladium was 16 nm. Further, a BET surface area per unit volumetric capacity in liter was determined on the catalyst L. As a result, the BET surface area per unit volumetric capacity in liter of the catalyst M was about 16,000 m²/L-cat.

### (Performance evaluation A)

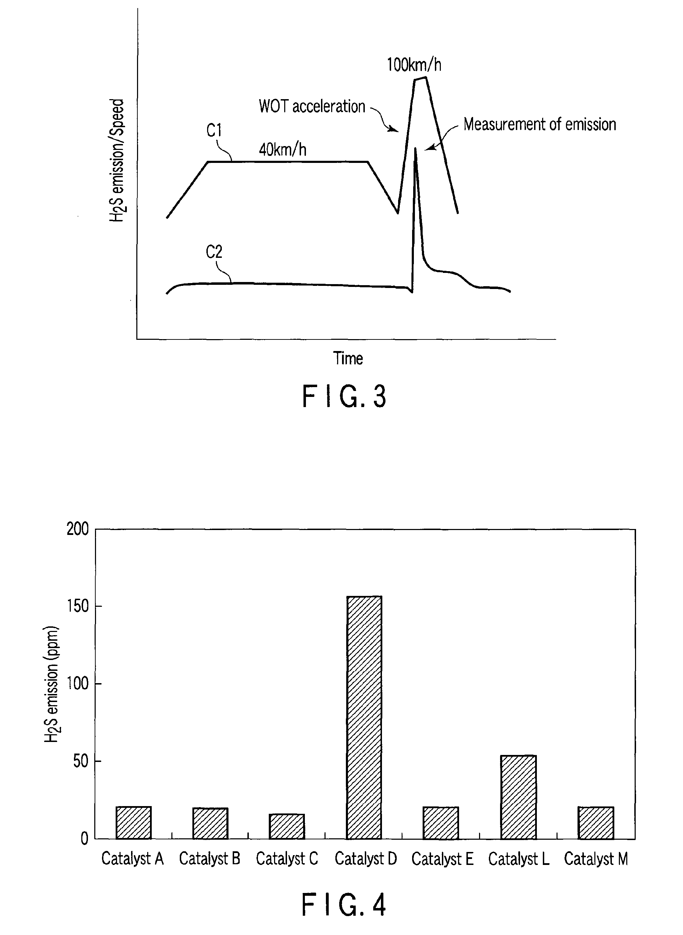

Next, each of the catalysts A to E, L and M was mounted on a four-wheeled vehicle having an inline four-cylinder engine with a piston displacement of 1.5L. Then, hydrogen sulfide emission was determined under the conditions shown in FIG. 3.

FIG. 3 is a graph showing conditions for measuring hydrogen sulfide emission. In the figure, the abscissa denotes time, while the ordinate denotes hydrogen sulfide (H₂S) emission and the speed of the vehicle. Also, the curve C1 represents the driving modes for the vehicle, while the curve C2 represents the change in an amount of hydrogen sulfide emitted by the vehicle.

As the curve C1 shown in FIG. 3, the vehicle was driven at a speed of 40 km/h for a sufficient period of time, and then, the speed of the vehicle was decreased to zero. Subsequently, the speed of the vehicle was increased from zero to 100 km/h under the WOT (wide open throttle) acceleration conditions. The hydrogen sulfide emission was obtained as the maximum concentration of hydrogen sulfide in the exhaust gas emitted by the vehicle at this time. The results are shown in Table 1 and FIG. 4.

**Table 1**

| Catalyst | Mean diameter of Pt/Pd (nm) | BET surface area of catalyst (m²/L-cat) | Ratio S₁/S₀ | H₂S emission (ppm) |
|---|---|---|---|---|
| A | 32 | 16000 | 0.78 | 21 |
| B | 10 | 6000 | 0.83 | 20 |
| C | 25 | 6000 | 0.83 | 17 |
| D | 1 | 25000 | 0.50 | 156 |
| E | 1 | 25000 | 0.48 | 21 |
| L | 10 | 15000 | 0.33 | 53 |
| M | 16 | 16000 | 0.78 | 19 |

FIG. 4 is a graph showing hydrogen sulfide emission. In the figure, the abscissa denotes a variety of exhaust gas-purifying catalysts, while the ordinate denotes hydrogen sulfide emission.

As shown in Table 1 and FIG. 4, in the cases where the catalyst A to C, L and M were used, hydrogen sulfide emission could be decreased with respect to the case where the catalyst D was used. Further, in the cases where the catalyst A to C and M were used, the hydrogen sulfide emissions achieved were equal to or less than that in the case where the catalyst E was used.

Next, a specific surface area S₁ of the catalyst support layer after heated in the air atmosphere at 1,000°C for 5 hours and a specific surface area S₀ of the catalyst support layer before heating were determined on each of the catalysts A to E, L and M to obtain their ratio S₁/S₀. Determination of the specific surface area was performed using a specimen obtained by partially removing the catalyst support layer from the monolith honeycomb support. The results are summarized in Table 1 above.

As shown in Table 1, regarding the catalysts A to C, L and M, the greater the ratio S₁/S₀ was, the lower the level of hydrogen sulfide emission became. Further, in the case where the ratio S₁/S₀ was about 0.7 or more, hydrogen sulfide emission of about 21 ppm or less could be achieved.

### (Manufacture of catalyst F)

An exhaust gas-purifying catalyst was manufactured by the same method as that described for the catalyst A except that the temperature of firing was changed from 900°C to 700°C. Hereinafter, the exhaust gas-purifying catalyst is referred to as catalyst F.

By the method described above, a mean diameter of platinum was determined on the catalyst F. As a result, the mean diameter of platinum was 10 nm. Further, a BET surface area per unit volumetric capacity in liter was determined on the catalyst F. As a result, the BET surface area per unit volumetric capacity in liter of the catalyst F was about 23,500 m²/L-cat.

### (Manufacture of catalyst G)

An exhaust gas-purifying catalyst was manufactured by the same method as that described for the catalyst A except that the temperature of firing was changed from 900°C to 800°C. Hereinafter, the exhaust gas-purifying catalyst is referred to as catalyst G.

By the method described above, a mean diameter of platinum was determined on the catalyst G. As a result, the mean diameter of platinum was 21 nm. Further, a BET surface area per unit volumetric capacity in liter was determined on the catalyst G. As a result, the BET surface area per unit volumetric capacity in liter of the catalyst F was about 19,000 m²/L-cat.

### (Manufacture of catalyst H)

An exhaust gas-purifying catalyst was manufactured by the same method as that described for the catalyst A except that the temperature of firing was changed from 900°C to 950°C. Hereinafter, the exhaust gas-purifying catalyst is referred to as catalyst H.

By the method described above, a mean diameter of platinum was determined on the catalyst H. As a result, the mean diameter of platinum was 46 nm. Further, a BET surface area per unit volumetric capacity in liter was determined on the catalyst H. As a result, the BET surface area per unit volumetric capacity in liter of the catalyst H was about 15,000 m²/L-cat.

### (Manufacture of catalyst N)

An exhaust gas-purifying catalyst was manufactured by the same method as that described for the catalyst A except that the temperature of firing was changed from 900°C to 1,000°C. Hereinafter, the exhaust gas-purifying catalyst is referred to as catalyst N.

By the method described above, a mean diameter of platinum was determined on the catalyst N. As a result, the mean diameter of platinum was 64 nm. Further, a BET surface area per unit volumetric capacity in liter was determined on the catalyst N. As a result, the BET surface area per unit volumetric capacity in liter of the catalyst N was about 12,000 m²/L-cat.

### (Manufacture of catalyst O)

An exhaust gas-purifying catalyst was manufactured by the same method as that described for the catalyst A except that the temperature of firing was changed from 900°C to 1,050°C. Hereinafter, the exhaust gas-purifying catalyst is referred to as catalyst O.

By the method described above, a mean diameter of platinum was determined on the catalyst O. As a result, the mean diameter of platinum was 96 nm. Further, a BET surface area per unit volumetric capacity in liter was determined on the catalyst O. As a result, the BET surface area per unit volumetric capacity in liter of the catalyst O was about 9,500 m²/L-cat.

### (Performance evaluation B)

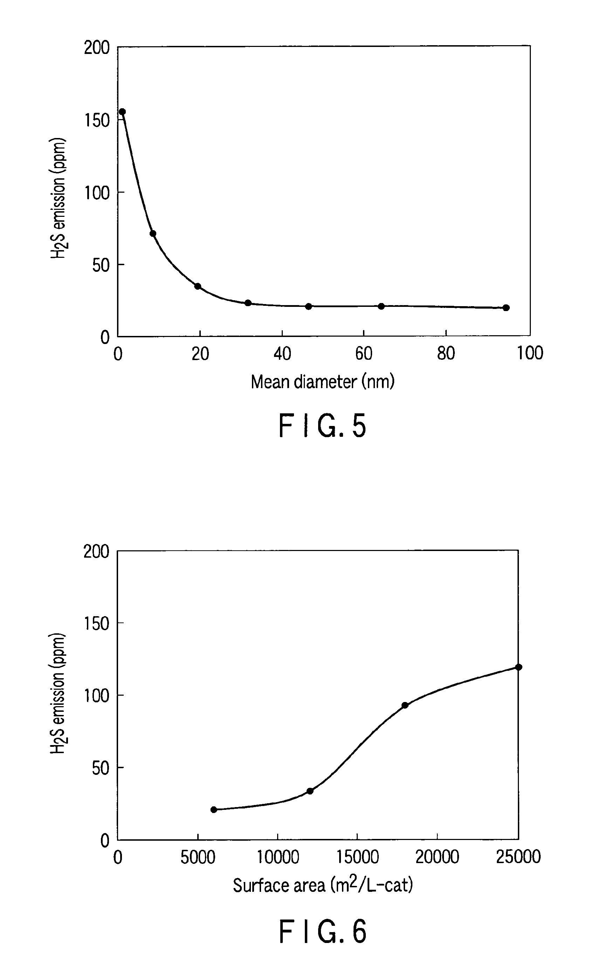

Next, each of the catalysts F to H, N and O was mounted on a four-wheeled vehicle having an inline four-cylinder engine with a piston displacement of 1.5L. Then, hydrogen sulfide emission was determined under the conditions shown in FIG. 3. That is, performance evaluation was performed on each of the catalysts F to H, N and O under the same conditions as that of the evaluation performed on each of the catalysts A to E, L and M. The results are shown in Table 2 and FIG. 5.

**Table 2**

| Catalyst | Temperature of firing (°C) | Mean diameter of Pt (nm) | BET surface area of catalyst (m²/L-cat) | H₂S emission (ppm) |
|---|---|---|---|---|
| D | 500 | 1 | 25000 | 156 |
| F | 700 | 10 | 23500 | 69 |
| G | 800 | 21 | 19000 | 34 |
| A | 900 | 32 | 16000 | 21 |
| H | 950 | 46 | 15000 | 19 |
| N | 1000 | 64 | 12000 | 20 |
| O | 1050 | 96 | 9500 | 18 |

FIG. 5 is a graph showing an example of effect that a diameter of platinum exerts on hydrogen sulfide emission. In the figure, the abscissa denotes a mean diameter of platinum contained in an exhaust gas-purifying catalyst, while the ordinate denotes hydrogen sulfide emission.

As shown in Table 2, the higher the temperature of firing was, the larger the mean diameter of platinum became and the smaller the BET surface area became. In addition, the larger the mean diameter of platinum was, the lower the level of hydrogen sulfide emission became.

### (Manufacture of catalyst I)

An exhaust gas-purifying catalyst was manufactured by the same method as that described for the catalyst B except that alumina having a BET specific surface area of 400 m²/g was used instead of alumina having a BET specific surface area of 80 m²/g. Hereinafter, the exhaust gas-purifying catalyst is referred to as catalyst I.

By the method described above, a mean diameter of platinum was determined on the catalyst I. As a result, the mean diameter of platinum was 10 nm. Further, a BET surface area per unit volumetric capacity in liter was determined on the catalyst I. As a result, the BET surface area per unit volumetric capacity in liter of the catalyst I was about 25,000 m²/L-cat.

### (Manufacture of catalyst J)

An exhaust gas-purifying catalyst was manufactured by the same method as that described for the catalyst B except that alumina having a BET specific surface area of 280 m²/g was used instead of alumina having a BET specific surface area of 80 m²/g. Hereinafter, the exhaust gas-purifying catalyst is referred to as catalyst J.

By the method described above, a mean diameter of platinum was determined on the catalyst J. As a result, the mean diameter of platinum was 10 nm. Further, a BET surface area per unit volumetric capacity in liter was determined on the catalyst J. As a result, the BET surface area per unit volumetric capacity in liter of the catalyst J was about 18,000 m²/L-cat.

### (Manufacture of catalyst K)

An exhaust gas-purifying catalyst was manufactured by the same method as that described for the catalyst B except that alumina having a BET specific surface area of 180 m²/g was used instead of alumina having a BET specific surface area of 80 m²/g. Hereinafter, the exhaust gas-purifying catalyst is referred to as catalyst K.

By the method described above, a mean diameter of platinum was determined on the catalyst K. As a result, the mean diameter of platinum was 10 nm. Further, a BET surface area per unit volumetric capacity in liter was determined on the catalyst K. As a result, the BET surface area per unit volumetric capacity in liter of the catalyst K was about 12,000 m²/L-cat.

### (Performance evaluation C)

Next, each of the catalysts I to K was mounted on a four-wheeled vehicle having an inline four-cylinder engine with a piston displacement of 1.5L. Then, hydrogen sulfide emission was determined under the conditions shown in FIG. 3. That is, performance evaluation was performed on each of the catalysts I to K under the same conditions as that of the evaluation performed on each of the catalysts A to E, L and M.

The results are shown in Table 3 and FIG. 6.

**Table 3**

| Catalyst | BET specific surface area of alumina (m²/g) | Mean diameter of Pt (nm) | BET surface area of catalyst (m²/L-cat) | H₂S emission (ppm) |
|---|---|---|---|---|
| I | 400 | 10 | 25000 | 118 |
| J | 280 | 10 | 18000 | 92 |
| K | 180 | 10 | 12000 | 33 |
| B | 80 | 10 | 6000 | 20 |

FIG. 6 is a graph showing an example of effect that a BET surface area of a catalyst exerts on hydrogen sulfide emission. In the figure, the abscissa denotes a BET surface area of an exhaust gas-purifying catalyst, while the ordinate denotes hydrogen sulfide emission.

As apparent from Table 3 and the above-descriptions, when alumina with a smaller BET specific surface area was used for preparation of slurry, the BET surface area of the catalyst was decreased. In addition, as shown in Table 3 and FIG. 6, the smaller the BET surface area of the catalyst was, the lower the level of hydrogen sulfide emission became.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general invention concept as defined by the appended claims and their equivalents.

## Claims

1. An exhaust gas-purifying catalyst comprising:
a support substrate;
a catalyst support layer supported by the support substrate and including porous carrier; and
a precious metal supported by the porous carrier, a mean diameter of the precious metal being 5 nm or larger.

2. The exhaust gas-purifying catalyst according to claim 1, wherein the mean diameter of the precious metal is 30 nm or larger.

3. The exhaust gas-purifying catalyst according to claim 2, wherein a surface area per unit volumetric capacity in liter is 15,000 m² or smaller.

4. The exhaust gas-purifying catalyst according to claim 3, wherein a ratio S₁/S₀ of a specific surface area S₁ of the catalyst support layer after heated in the air atmosphere at 1,000°C for 5 hours with respect to a specific surface area S₀ of the catalyst support layer before heating is 0.7 or more.

5. The exhaust gas-purifying catalyst according to claim 4, wherein the ratio S₁/S₀ is 0.8 or more.

6. The exhaust gas-purifying catalyst according to claim 1, wherein a surface area per unit volumetric capacity in liter is 15,000 m² or smaller.

7. The exhaust gas-purifying catalyst according to claim 1, wherein a ratio S₁/S₀ of a specific surface area S₁ of the catalyst support layer after heated in the air atmosphere at 1,000°C for 5 hours with respect to a specific surface area S₀ of the catalyst support layer before heating is 0.7 or more.

8. The exhaust gas-purifying catalyst according to claim 7, wherein the ratio S₁/S₀ is 0.8 or more.
